# EUROPÄISCHE PATENTSCHRIFT

(11) **EP 0 399 194 B1**
(45) Veröffentlichungstag und Bekanntmachung des Hinweises auf die Patenterteilung: **13.01.1993**
(21) Anmeldenummer: 90106761.1
(22) Anmeldetag: 09.04.1990
(51) Int. Cl.: F16D 65/16, F16D 55/02

(54) **Scheibenbremse für Fahrzeuge**
Disc brake for vehicles
Frein à disque pour véhicule

(30) Priorität: 23.05.1989 DE 3916741
(43) Veröffentlichungstag der Anmeldung: 28.11.1990
(73) Patentinhaber: KNORR-BREMSE AG, 80710 München (DE)
(72) Erfinder: Golea, Filip, D-8000 München 83 (DE); Wirth, Xaver, Dr., D-8045 Ismaning (DE)

(56) Entgegenhaltungen:
- EP-A- 0 259 565
- DE-A- 3 013 862
- DE-A- 3 142 799
- DE-A- 3 317 980
- GB-A- 1 418 018
- GB-A- 2 163 820

## Beschreibung

Die Erfindung betrifft eine Scheibenbremse nach dem Gattungsbegriff des Patentanspruches 1.

Durch Druckmittel betätigbare Scheibenbremsanlagen für Schienen- und Nutzfahrzeuge weisen in ihrer Ausgestaltung als Bremssattelkonstruktionen einen in einem Gehäuse bzw. im Bremssattelaufbau druckdicht geführten und durch hydraulisches oder pneumatisches Druckmittel beaufschlagbaren Kolben auf, welcher bei Betätigung gegenüber einer Bremsbacke wirkt, um diese mit ihrem Bremsbelag an eine abzubremsende Bremsscheibe anzudrücken. Von derartigen Arbeitskolben in Bremssätteln angepreßte Beläge machen aufgrund ihrer Lagerspiele kleine Querbewegungen; dem Kolben wird dadurch eine Querkraft aufgeprägt, die dem Produkt aus Kolbenkraft und Reibwert (Belagrücken/Kolben) entspricht.

Querbewegliche Druckplatten, welche in die Kolbenstirnfläche integriert sind, reduzieren bei gattungsgemäßen Scheibenbremsen (GB-A-1 418 018 und GB-A-2 163 820) diese Querkraft im Verhältnis der Reibwerte; die Druckplatten führen gegen den Widerstand von Rückstellelementen Querbewegungen innerhalb bestimmter Freigrenzen aus, wenn der Eingriff mit der Bremsscheibe erfolgt. Beim Lösen der Bremse führen die elastischen Rückstellelemente die Druckplatte mit einer Kraft zurück, welche proportional ihrer Auslenkung ist. Der Nachteil derartiger Anordnungen ist, daß die Reibung, unter anderem durch Dichtungen verursacht, ein Rückstellen der Druckplatte auf den Wert Null verhindert. Die Restauslenkung der Druckplatte vermindert die Verschieblichkeit bei der darauffolgenden Bremsung und führt fernerhin zu einer unverhältnismäßig starken seitlichen Auswandung, wenn eine Abbremsung in entgegengesetzter Drehrichtung erfolgt.

Davon ausgehend besteht die Aufgabe der Erfindung darin, eine Scheibenbremse der gattungsgemäßen Art so auszugestalten, daß die Druckplatte unabhängig vom Ausmaß ihrer Querbewegung immer absolut sicher in die Null- bzw. Ausgangslage zurückkehrt. Die Rückführung bzw. Rückstellkraft der Druckplatte soll vorzugsweise den jeweils bestehenden Einsatzbedingungen angepaßt werden können. Geichzeitig soll der hierfür vorgesehene Aufbau von denkbar einfachem Aufbau sein und die baulichen Maße der Scheibenbremseinrichtung nicht beeinträchtigen.

Zur Lösung dieser Aufgabe dienen die Merkmale nach dem Kennzeichnungsteil des Patentanspruches 1.

Die mit Hilfe eines einfachen Halteringes am Kolben befestigbare Druckplatte ist mit Hilfe eines Federmechanismus absolut sicher in die Nullage zurückführbar, da die Rückstellkraft nicht vom Ausmaß der sietlichen Auslenkung gegenüber z.B. am Umfang befindlicher elastischer Rückstell- und Dichtelemente abhängt, deren Funktion darüberhinaus durch Reib- oder Temperatureinwirkungen beeinflußt sein könnte. Die im Inneren des Kolbens befindliche Stößelanordnung mit zugeordneter Rückstell- bzw. Druckfeder ist von absolut sicherer Wirkungsweise, da die Vorspannung der Druckfeder mit Hilfe des Schraubringes ohne weiteres einstellbar und somit die Rückstellkraft den jeweiligen Einsatzbedingungen anpaßbar ist. Der Federmechanismus ist in baulich günstiger Weise im Inneren des Kolbens integriert und ist nach Entnahme der Druckplatte von außen zugängig, um gegebenenfalls eine Einstellung des Schraubringes vorzunehmen. Die Druckplatte selbst ist mit Hilfe des Halteringes am Kolben einschnappbar, d.h. unverlierbar gehaltert und kann auch wieder in einfacher Weise abgenommen werden.

Vorteilhafte Ausgestaltungen und Weiterbildungen sind in weiteren Unteransprüchen aufgeführt.

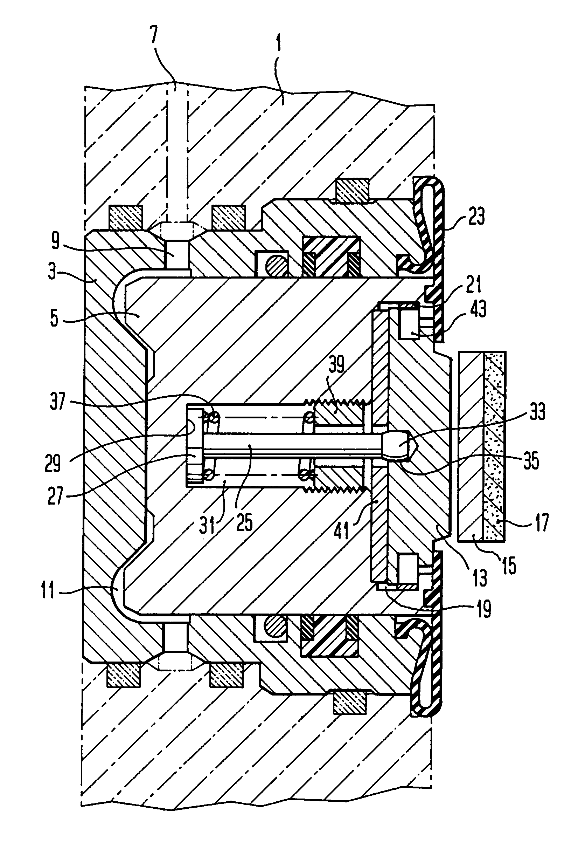

Die Erfindung ist nachfolgend anhand eines Ausführungsbeispiels unter Bezugnahme auf die beigefügte Zeichnung erläutert. Die Zeichnung zeigt in Teilschnittansicht eine Scheibenbremsanordnung nach der Erfindung.

In der einzigen Zeichnung ist in Teilschnittansicht ein Bremssattel 1 einer vorzugsweise hydraulisch betätigbaren Scheibenbremse dargestellt; in den Bremssattel 1 ist ein Gehäuse 3 eingesetzt, in welchem sich ein verschieblich gelagerter Kolben 5 befindet. Hydraulisches Druckmittel wird über die im Bremssattel 1 angedeutete Verbindung 7 und eine im Gehäuse 3 befindliche Bohrung 9 in den Druckraum 11 eingeleitet, derart, daß der Kolben 5 gemäß Darstellung in der Zeichnung nach rechts gerichtet verschiebbar ist. Durch (nicht dargestellte) Rückstellvorrichtungen ist der Kolben 5 bei Druckentlastung des Druckraums 11 in seine dargestellte Ausgangslage zurückführbar.

Der Kolben 5 wirkt mit einer an seiner Vorderseite befindlichen Druckplatte 13 auf eine Bremsbacke 15 ein, welche in herkömmlicher Weise einen Bremsbelag 17 an eine (nicht dargestellte) Bremsscheibe anzupressen vermag. Die Druckplatte 13 ist in einer Ausnehmung 19 des Kolbens 5 mittels eines Halterings 21 eingesetzt, wobei ein Faltenbalg 23 vorzugsweise den Ringspalt zwischen Druckplatte 13 und Kolben 5 als auch den Spaltbereich zwischen Kolben 5 und Gehäuse 3 abdichtet. Im Inneren des Kolbens 5 befindet sich ein Stößel 25 mit einer an seinem gemäß Darstellung linken Ende verhältnismäßig großflächigen Scheibe 27, welche in der Ausgangsposition in der in der Zeichnung wiedergegebenen Winkellage am Boden 29 der den Stößel aufnehmenden Bohrung 31 aufliegt. An seinem gemäß Darstellung in der Zeichnung rechten Ende ist der Stößel 25 mit seinem Stößelkopf 33 von vorzugsweise balliger Formgebung in einer Ausnehmung 35 der Druckplatte 13 geführt. Der Stößel ist durch eine Druckfeder 37 umgeben, welche sich einerseits an der Scheibe 27 und andererseits an einem zur Erzeugung einer Vorspannung dienenden Schraubring 39 abstützt. Zwischen dem Kolben 5 und der Druckplatte 13 befindet sich eine Gleitplatte 41 aus einem Material, welches der Druckplatte 13 an der ihr zugewandten Seite einen geringen Reibwiderstand entgegensetzt.

Der zur Befestigung der Druckplatte 13 dienende Haltering 21 ist von ovaler Konfiguration, d.h., daß er mit seinem großen Durchmesser in der Hinterschneidung des Kolbens 5 anliegt, während er mit seinem kleinen Durchmesser (nicht dargestellt) am Innendurchmesser der in die Druckplatte eingelassenen Nut 43 anzuliegen vermag. Auf diese Weise ist die Druckplatte 13 unverlierbar innerhalb des Ausnehmung 19 gehalten, kann jedoch in einfacher Weise herausgehoben werden, indem der Haltering 21 mittels eines durch den Ringspalt zwischen Druckplatte und Gehäuse eingeführten Werkzeugs in Kreisform verspannt wird. Es können auch andere schnellösliche Mittel vorgesehen sein, mittels welchen die Druckplatte am Kolben 5 gehaltert ist; es ist auch möglich, den Stößelkopf 33 mit einem schwenkbar gehalterten Gewindeteil zu versehen, auf welches ein entsprechendes Innengewinde der Druckplatte aufschraubbar ist.

Die Funktion der vorstehend beschriebenen Anordnung ist wie folgt :

Bei hydraulischer Verschiebung des Kolbens 5 in Richtung der Bremsscheibe wird die Bremsbacke 15 bei Eingreifen des Bremsbelags 17 an der Bremsscheibe in Umfangsrichtung (bezogen auf die Bremsscheibe) mitgenommen, derart, daß die an die Bremsbacke 15 angepreßte Druckplatte 13 ihrerseits innerhalb des im Kolben 5 bestehenden Freiraums seitlich verschoben wird, z.B. in der Zeichnung nach oben gerichtet. Diese seitliche Verschiebung führt zu einem Kippen des Stößels 25 und folglich zu einer entsprechenden Schieflage und einseitigen Verspannung der Druckfeder 37, welche die Neigung besitzt, den Stößel wieder in seine Parallellage innerhalb der Bohrung 31 zurückzuführen. Nach Freigabe der Druckplatte 13, d.h. beim Lösen der Bremse, wird die Rückstellkraft der Druckfeder 37 und somit des Stößels 25 wirksam, wodurch die Druckplatte in die neutrale Ausgangslage zurückgebracht wird. Dabei besitzt der Stößel bis zur Ausgangs- bzw. Nulllage eine definierte Rückstellkraft, gebildet durch die axiale Verspannung der Druckfeder 37. Die definierte Rückstellkraft kann, wie vorstehend beschrieben, mit Hilfe des Schraubrings 39 exakt eingestellt werden.

### Bezugszeichenliste

- 1: Bremssattel
- 3: Gehäuse
- 5: Kolben
- 7: Verbindung
- 9: Bohrung
- 11: Druckraum
- 13: Druckplatte
- 15: Bremsbacke
- 17: Bremsbelag
- 19: Ausnehmung
- 21: Haltering
- 23: Faltenbalg
- 25: Stößel
- 27: Scheibe
- 29: Boden
- 31: Bohrung
- 33: Stößelkopf
- 35: Ausnehmung
- 37: Druckfeder
- 39: Schraubring
- 41: Gleitplatte
- 43: Nut

## Patentansprüche

1. Scheibenbremse für Fahrzeuge, mit einem in einem Gehäuse (3) der Bremseinrichtung vorzugsweise hydraulisch beaufschlagbaren Kolben (5), welcher gegenüber einer einen Bremsbelag (17) tragenden Bremsbacke (15) zum Zwecke der Abbremsung einer Bremsscheibe zu wirken vermag, wobei sich an der der Bremsbacke (15) zugewandten Stirnfläche des Kolbens (5) eine in vorgegebenen Grenzen querbewegliche Druckplatte (13) befindet, welche durch einen Federmechanismus von definierter Rückstellkraft aus einer bei Bremsbetätigung seitlich ausgelenkten Lage in die Nullage bei Lösen der Bremse zurückführbar ist, dadurch gekennzeichnet, daß der Federmechanismus folgende Merkmale aufweist:
a) in rückwärtiger Verlängerung der Druckplatte (13) befindet sich eine axial sich erstreckende Bohrung (31);
b) am bezüglich der Druckplatte (13) abgewandten Ende (29) der Bohrung (31) stützt sich eine Scheibe (27) ab, von welcher sich ein mit ihr verbundener Stößel (25) unter Abstand zur Bohrungsinnenwand bis in die Druckplatte (13) erstreckt, wobei das der Scheibe (27) entgegengesetzte Ende des Stößels in einer Ausnehmung (35) der Druckplatte (13) aufgenommen ist;
c) der Stößel (25) ist von einer Druckfeder (37) umgeben, welche sich einerseits an der Scheibe (27) und andererseits an einem gegenüber der Innenwand der Bohrung (31) verschraubten Schraubring (39) abstützt;
d) der Stößel (25) durchsetzt mit Spiel axial den Schraubring (39), derart, daß ein vorgegebener Freiheitsgrad für Kippbewegungen des Stößels (25) gegeben ist, und
e) das der Scheibe (27) entgegengesetzte Ende des Stößels ist mittels eines vorzugsweise abgerundeten Stößelkopfes (33) in einer entsprechend geformten Ausnehmung (35) der Druckplatte (13) geführt.

2. Scheibenbremse nach Anspruch 1, dadurch gekennzeichnet, daß der Schraubring (39) zum Zwecke der Veränderung der Vorspannung der Druckfeder (37) innerhalb des Gewindes der Bohrung (31) positionsveränderlich verschraubbar ist.

3. Scheibenbremse nach einem der vorangehenden Ansprüche, dadurch gekennzeichnet, daß sich zwischen der der Druckplatte (13) zugewandten Stirnfläche des Kolbens (5) und der Druckplatte (13) eine Gleitplatte (41) von geringem Reibwert befindet, derart, daß die Druckplatte (13) relativ zur Gleitplatte (41) auf dieser seitlich verschiebbar und durch den Federmechanismus in die Nullage zurückführbar ist.

4. Scheibenbremse nach einem der vorangehenden Ansprüche, gekennzeichnet durch folgende Merkmale:
a) am Außenumfang der Druckplatte (13) befindet sich eine Nut (43);
b) im Bereich der die Druckplatte (13) aufnehmenden Ausnehmung (19) ist der Nut (43) gegenüberliegend eine nutförmige Hinterschneidung am Kolben (5) zugeordnet;
c) zur schnellöslichen Montage der Druckplatte (13) ist in die Nut (43) der Druckplatte ein Haltering (21) eingesetzt, welcher von ovaler Formgebung ist, derart, daß der große Durchmesser des Rings an der Innenwand der nutförmigen Hinterschneidung des Kolbens anliegt und der kleine Durchmesser des Rings am Innendurchmesser der Nut (43) der Druckplatte anliegt.

5. Scheibenbremse nach Anspruch 4, dadurch gekennzeichnet, daß der Haltering (21) mittels eines Werkzeugs in Ringform zusammenpressbar und aus der nutförmigen Hinterschneidung bzw. der Nut (43) heraushebbar ist.

## Claims

1. Disc brake for vehicles, having a piston (5) in a housing (3) of the brake device and preferably capable of being loaded hydraulically, the piston being capable of operating relative to a brake block (15), carrying a brake lining (17), for the purpose of braking a brake disc, wherein at the face of the piston (5) facing the brake block (15) there is located a pressure plate (13) which can be moved transversely within specified limits, which pressure plate can be returned by means of a spring mechanism of defined resetting force from a position which is laterally deflected upon brake actuation into the zero position on release of the brake, characterized in that the spring mechanism has the following features:
a) in a rearward extension of the pressure plate (13) there is located an axially extending bore (31);
b) at the far end (29) of the bore (31) with respect to the pressure plate (13) there is supported a disc (27), from which a pushrod (25) connected therewith extends with clearance from the inner wall of the bore up to and into the pressure plate (13), with the end of the pushrod opposite the disc (27) being received in a recess (35) of the pressure plate (13);
c) the pushrod (25) is surrounded by a compression spring (37) which is supported on one side on the disc (27) and on the other side on a screw ring (39) screwed with respect to the inner wall of the bore (31);
d) the pushrod (25) passes axially through the screw ring (39) with clearance in such a way that a specified degree of freedom for tilting movements of the pushrod (25) is given, and
e) the end of the pushrod opposite the disc (27) is guided by means of a preferably rounded pushrod head (33) in an appropriately formed recess (35) of the pressure plate (13).

2. Disc brake according to claim 1, characterized in that the screw ring (39) can be screwed within the thread of the bore (31) in a position-variable manner for the purpose of changing the prestressing of the compression spring (37).

3. Disc brake according to one of the preceding claims, characterized in that there is located between the face of the piston (5) facing the pressure plate (13) and the pressure plate (13) a sliding plate (41) of low friction coefficient in such a way that the pressure plate (13) can be displaced on the sliding plate (41) in the lateral direction relative to it and can be returned into the zero position by means of the spring mechanism.

4. Disc brake according to one of the preceding claims, characterized by the following features:
a) a groove (43) is located at the outer circumference of the pressure plate (13);
b) in the region of the recess (19) receiving the pressure plate (13) there is allocated a groove-shaped undercut on the piston (5), lying opposite the groove (43);
c) for the assembly of the pressure plate (13) which can be undone quickly there is inserted into the groove (43) of the pressure plate a holding ring (21) which is of oval shaping, in such a way that the large diameter of the ring abuts the inner wall of the groove-shaped undercut of the piston and the small diameter of the ring abuts the inner diameter of the groove (43) of the pressure plate.

5. Disc brake according to claim 4, characterized in that by means of a tool the holding ring (21) can be compressed into the shape of a ring and can be lifted from the groove-shaped undercut or the groove (43).

## Revendications

1. Frein à disque pour des véhicules, comportant, dans un carter (3) de l'installation de freinage, un piston (5) qui est susceptible d'être chargé, de préférence, par voie hydraulique, et qui est capable, dans le but du freinage d'un disque de frein, d'agir par rapport à un plateau (ou un étrier) de freinage (15) portant une garniture de frein (17), une plaque de pression (13) capable de déplacements transversaux dans des limites prédéterminées étant prévue du côté de la surface frontale du piston, qui est voisine du plateau de freinage, alors que la plaque de pression est capable d'être ramenée, à l'aide d'un mécanisme élastique à force de rappel déterminée, d'une position de déviation latérale, dans le cas d'une commande de freinage, dans sa position de repos ou position zéro, lors du désserage du frein, caractérisé par le fait que le mécanisme élastique présente les particularités suivantes :
a) dans le prolongement arrière de la plaque de pression (13), est prévu un perçage (31) qui s'étend axialement ;
b) contre l'extrémité (29) du perçage (31), qui est éloignée de la plaque de pression (13), prend appui un disque (27) à partir duquel s'étend jusqu'à l'intérieur de la plaque de pression (13) et à distance de la paroi intérieure du perçage, un poussoir (25) relié audit disque (27), l'extrémité du poussoir, qui est éloignée du disque, étant reçue dans une ouverture (35) de la plaque de pression (13) ;
c) le poussoir (25) est entouré par un ressort de pression (37) qui prend appui, d'une part, contre le disque (27), et, d'autre part, contre une bague filetée vissée dans la paroi intérieure du perçage (31) ;
d) le poussoir (25) passe axialement et avec jeu à travers la bague filetée (39) de telle manière que le poussoir (25) possède un degré prédeterminé de liberté pour des mouvements de basculement, et
e) l'extrémité du poussoir, qui est éloignée du disque (27), est guidée à l'aide d'une tête de poussoir (33), de préférence arrondie, logée dans une cuvette (35) conformée de façon correspondante.

2. Frein à disque selon la revendication 1, caractérisé par le fait que la position de la bague filetée (39) peut être modifiée dans le filetage du perçage (31) en vue de modifier la précontrainte du ressort de pression (37).

3. Frein à disque selon l'une des revendications précédentes, caractérisé par le fait qu'entre la surface frontale du piston (5), voisine de la plaque de pression (13) et ladite plaque de pression (13), est prévu un plateau de friction (41) à faible coefficient de pression, la réalisation étant telle que la plaque de pression (13) est susceptible de se déplacer latéralement par rapport et sur le plateau de friction (41) et est susceptible d'être ramenée dans la position zéro par le mécanisme élastique.

4. Frein à disque selon l'une des revendications précédentes, caractérisé par les particularités suivantes :
a) dans la périphérie extérieure de la plaque de pression (13) est ménagée une gorge (43) ;
b) dans la zone de l'ouverture (19) qui reçoit la plaque de pression (13), il est prévu, en face de la gorge (43), sur le piston (5), un détalonnage en forme de gorge ;
c) pour le montage, à démontage rapide, de la plaque de pression (13), il est engagé, dans la gorge (43) de la plaque de pression, une bague de maintien (21) de conformation ovale, la réalisation étant telle que le grand diamètre de la bague porte contre la paroi intérieure du détalonnage en forme de gorge du piston, alors que le petit diamètre de la bague porte contre le diamètre intérieure de la gorge de la plaque de pression.

5. Frein à disque selon la revendication 4. caractérisé par le fait que la bague de maintien, peut, à l'aide d'un outil, être comprimée à la forme annulaire et être dégagée du détalonnage en forme de gorge ou de la gorge (43).
